## Europäisches Patentamt
## European Patent Office
## Office européen des brevets

(19)

(11) Veröffentlichungsnummer: **0 016 353**
**B1**

(12) # EUROPÄISCHE PATENTSCHRIFT

(45) Veröffentlichungstag der Patentschrift:
**15.09.82**

(51) Int. Cl.³: **E 04 C 1/39,** E 01 F 8/00,
E 02 D 29/02, A 01 G 9/02

(21) Anmeldenummer: **80100915.0**

(22) Anmeldetag: **25.02.80**

(54) **Bauelementensatz zur Errichtung von Raumgitterkonstruktionen.**

(30) Priorität: **14.03.79 AT 1929/79**

(43) Veröffentlichungstag der Anmeldung:
**01.10.80 Patentblatt 80/20**

(45) Bekanntmachung des Hinweises auf die Patenterteilung:
**15.09.82 Patentblatt 82/37**

(84) Benannte Vertragsstaaten:
**BE CH DE FR GB IT LU NL SE**

(56) Entgegenhaltungen:
**DE-A-2 532 520**
**DE-A-2 619 274**
**DE-A-2 718 290**
**DE-A-2 822 294**
**FR-A-2 421 243**

(73) Patentinhaber: **Baugesellschaft Nägele & Co.,**
**Montfortstrasse 143, A-6832 Sulz-Röthis (AT)**

(72) Erfinder: **Gau, Albert, Klosterstrasse 8b,**
**A-6804 Feldkirch-Altenstadt (DE)**

(74) Vertreter: **Hefel, Herbert, Dipl.-Ing., Egelseestrasse 65a,**
**A-6800 Feldkirch-Tosters (AT)**

## Beuelementensatz zur Errichtung von Raumgitterkonstruktionen

Die Erfindung betrifft einen Bauelementensatz zur Errichtung von Raumgitterkonstruktionen, z. B. bepflanzbaren Stütz-, Böschungs-, Schallschluckmauern od. dgl., bestehend aus in Längsrichtung der Mauer sich erstreckenden Tragelementen und quer dazu verlaufenden, als Abstandhalter für die Tragelemente ausgestalteten Stützelementen, wobei die einzelnen Lagen von Tragelementen und Stützelementen einander abwechselnd formschlüssig übergreifen.

Es sind bereits einige Ausführungsformen solcher Bauelementensätze bekanntgeworden. Ein solches bekanntes System sieht Längselemente und Stützböcke vor, wobei die Stützböcke an ihrem vorderen unteren Ende zum Ende hin offene Ausnehmungen aufweisen, damit das auf dem nächsttieferliegenden Stützbock abgestützte Längselement überfaßt werden kann. Nachdem aus solchen Bauelementen errichtete Mauern bepflanzt werden und gerade auch bei Böschungsmauern ein entsprechender Bergdruck vorhanden ist, bietet diese Ausgestaltung zu wenig Widerstand gegen horizontales Verschieben der Längselemente quer zur Mauerlängsrichtung. Auch könnten sich durch ständige Erschütterungen die Längselemente aus den einander übergreifenden Stützböcken lösen.

Es sind auch Stützmauern bekanntgeworden, bei welchen fächerartig übereinander angeordnete Plattenelemente vorgesehen sind, welche durch zwischengestellte Formstücke in Abstand gehalten sind und zugleich den Verband bilden. Eine derartige Ausgestaltung ist für kleinere Stützmauern durchaus denkbar. Wenn jedoch relativ tiefe Mauerkonstruktionen erforderlich sind infolge eines entsprechenden Bergdruckes, so ist eine derartige Ausgestaltung völlig ungeeignet, denn derartig breite, über die ganze Dicke der Mauer einstückige Längselemente wären nicht mehr rationell zu fertigen und zu montieren. Außerdem sind diese hier verwendeten Einzelelemente kompliziert in der Herstellung, wobei außerdem eine sehr genaue Fertigung erforderlich ist, damit die einzelnen Elemente, welche ja in Durchgangsöffnungen gegenseitig eingreifen müssen, haargenau zueinander passen.

Auch eine weitere Ausgestaltung einer Stützmauer ist nur bei geringeren Bergdrücken anwendbar. Wenn größere Lasten aufgenommen werden müssen, kann dies nur durch entsprechende Verankerungen im Untergrund erfolgen. Auch hier ist wiederum eine exakte Fertigung und genaueste gegenseitige Abstimmung der einzelnen Bauelemente erforderlich, da diese fugenschließend ineinander geschachtelt werden müssen.

Es ist weiters ein Bauelementensatz bekannt, bei dem in Längsrichtung der Mauer verlaufende Tragelemente und quer dazu verlaufende Stützelemente vorgesehen sind. Die Stützelemente weisen an ihrem vorderen Abschluß eine nutartige Vertiefung an deren Unterseite auf. Die in Längsrichtung der Mauer sich erstreckenden Tragelemente sind an ihrer Oberseite mit einem vorspringenden Steg ausgestattet, wobei diese beiden Teile korrespondierend zueinander ausgeführt sind. Eine Verstellmöglichkeit zwischen dem Tragelement und dem vorderen Bereich des Stützelementes ist nicht möglich. Außerdem ist keine formschlüssige Verbindung zwischen einem Stützelement und dem nächstfolgenden Tragelement möglich. Es ist daher notwendig, daß in diesem Bereich die Tragelemente und die Stützelemente durch Anker miteinander verbunden werden, was jedoch eine nicht zu unterschätzende zusätzliche Arbeit und auch zusätzliche Kosten bedingt. Derartige bekannte Ausbildungen können vielleicht günstig dort eingesetzt werden, wo es lediglich darum geht, eine Böschung mit entsprechenden Elementen zu versehen. Die Erstellung einer selbständigen Stütz- bzw. Schallschluckmauer kann mit derartigen Elementen nicht erfolgen.

Bei einer bekannten Schallschutzwand (DE-A-2 619 274) sind längs- und querverlegte Fertigteile vorgesehen, bei denen übereinanderliegende Scharen von Läuferelementen vorgesehen sind, zwischen welchen im rechten Winkel dazu sich erstreckende Binderelemente angeordnet werden. Bei dieser Ausführungsform weisen die Binderelemente an zumindest einem Ende einen T-förmigen Kopf auf, wobei diese vorspringenden Teile in eine Ausnehmung an der Vorderseite der Läuferelemente eingreifen. Dadurch kann wohl eine Sicherung der Läuferelemente zur Außenbegrenzung der Mauer hin, aber nicht gegen das Mauerinnere hin erreicht werden, denn durch die Reibung der aufeinanderliegenden Teile allein kann zum Beispiel ein bergseitiger Druck von den Läuferelementen in diesem Bereich nicht aufgefangen werden, da eine sichere Raumgitterkonstruktion nur durch eine sichere, quer zur Längserstreckung wirkende formschlüssige Verbindung aller Teile möglich ist.

Die vorliegende Erfindung hat sich zur Aufgabe gestellt, einen Bauelementensatz zur Errichtung von Raumgitterkonstruktionen zu schaffen, mit welchem die erwähnten Nachteile vermieden werden können und welcher sowohl in der Fertigung als auch bei der Montage und auch bezüglich der Festigkeit des Raumgittergebildes wesentliche Vorteile mit sich bringt.

Erfindungsgemäß gelingt dies dadurch, daß die Tragelemente zumindest an ihrem einen Längsrandbereich und wenigstens im Kreuzungsbereich mit den Stützelementen an ihrer Oberseite und ihrer Unterseite profilartig in Längsrichtung der Tragelemente verlaufende Verstärkungen und die Stützelemente an ihren oberen und unteren Begrenzungsflächen zwei oder mehrere, dazu korrespondierende, mit Abstand von den Enden der Stützelemente und in rasterartig gleichem Abstand voneinander vorgesehene Vertiefungen aufweisen.

Durch diese erfindungsgemäßen Maßnahmen können die Tragelemente und die Stützelemente in einfachster Ausgestaltung übereinander geschichtet werden, wobei ein echter Gitterverband entsteht, welcher auch große, quer zur Mauerlängsrichtung verlaufende Belastungen ohne Schwierigkeit aufnehmen kann. Da die Tragelemente und die Stützelemente lediglich aufeinander abgestützt sind und nicht ineinander geschachtelt werden müssen, ergeben sich keine Schwierigkeiten bei der Montage, da bei einem Bauelementensatz gemäß der vorliegenden Erfindung die Toleranzen durchaus größer bemessen werden können. Mit der Ausgestaltung gemäß der vorliegenden Erfindung können selbständige Raumgitterkonstruktionen erstellt werden, die durch das formschlüssige Ineinandergreifen der einzelnen Bauelemente ohne zusätzliche Befestigungsmaßnahmen eine ausreichende Standsicherheit aufweisen.

Weitere erfindungsgemäße Merkmale und besondere Vorteile werden in der nachstehenden Beschreibung anhand der Zeichnungen noch näher erläutert. Es zeigen die

Fig. 1 bis 3 verschiedene Ausführungsformen von Stützelementen in Schrägsicht, die

Fig. 4 und 5 zwei Standardausführungsformen von Tragelementen, die

Fig. 6, 7 und 9 verschiedene Aufbauformationen mit Elementen der Fig. 1 und 2 sowie 4 und 5,

Fig. 8 eine Schrägsicht eines Teiles der Ausführungsform gemäß Fig. 7, die

Fig. 10 und 11 zwei Ausführungsvarianten der Tragelemente mit verlängerten Plattenelementen,

Fig. 12 eine Ausführungsform eines Tragelementes, mit welchem zwei Mauerteile miteinander verbunden werden können, die

Fig. 13 bis 15 verschiedene Ausführungsvarianten der an den Tragelementen vorgesehenen Brüstungselemente.

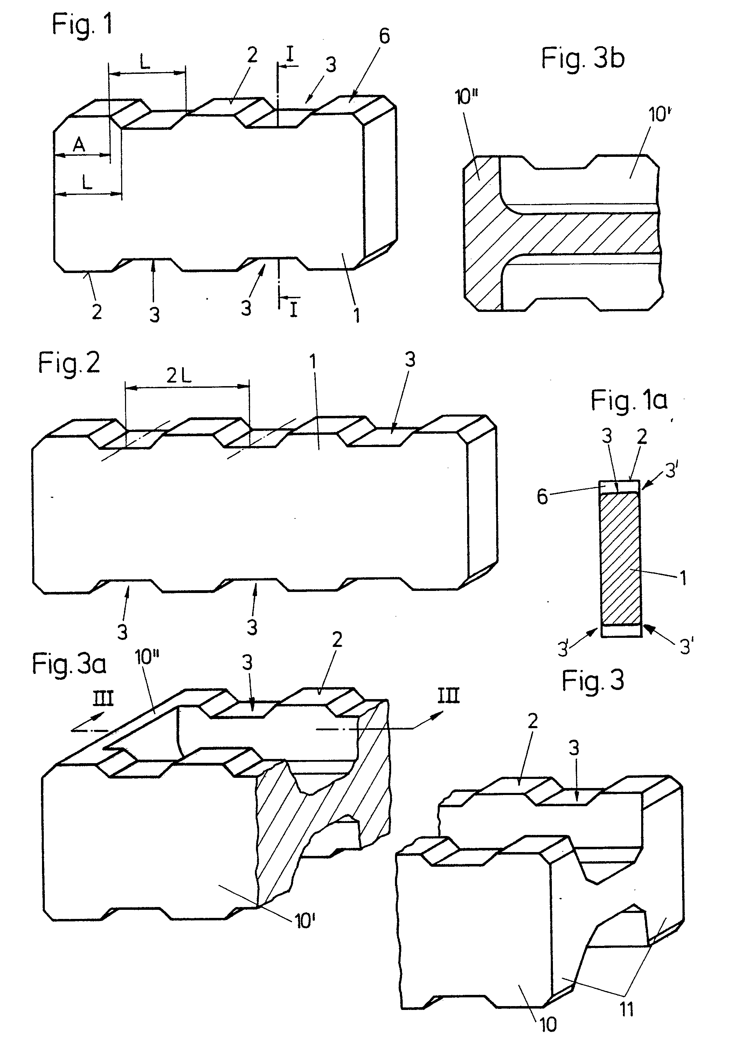

In den Fig. 1 und 2 sind Stützelemente 1 verschiedener Länge dargestellt. Diese Stützelemente sind an ihren oberen und unteren Begrenzungsflächen 2 mit Vertiefungen 3 versehen. Diese Vertiefungen sind korrespondierend zu Verstärkungen 4 an den Tragelementen 5 ausgebildet. Diese Verstärkungen 4 sind an dem einen Längsrandbereich der Tragelemente 5 angeordnet und führen zweckmäßigerweise über die ganze Länge der Tragelemente. Selbstverständlich besteht auch die Möglichkeit, diese Verstärkungen 4 lediglich im Kreuzungsbereich mit den Stützelementen 1 vorzusehen, also beispielsweise nur an den Endbereichen und gegebenenfalls bei entsprechenden Längen auch im Mittelbereich der Tragelemente 5. Die Verstärkungen 4 sind profilartig ausgebildet und verlaufen in Längsrichtung der Tragelemente. Zweckmäßigerweise werden diese Verstärkungen 4 bzw. die dazu korrespondierenden Vertiefungen 3 in den Stützelementen 1 im Querschnitt annähernd trapezförmig ausgestaltet. Durch die Querschnittsform ergibt sich eine einfache Fertigung und auch bei der Montage ergeben sich dadurch keine Schwierigkeiten, da ohne weiteres Toleranzfehler ausgeglichen werden können.

Ein weiteres wesentliches Merkmal liegt nun darin, daß die Vertiefungen 3 in den Stützelementen 1 rasterartig in gleichen Abständen über die ganze Länge derselben verteilt angeordnet sind. Dadurch kann eine Variation bei der Errichtung der Mauern in einfachster Weise durchgeführt werden, ohne daß es hierzu besonderer, auf die Gegebenheit zugeschnittener Elemente bedarf. Es können daher beispielsweise Stützelemente mit zwei, drei, vier usw. Vertiefungen 3 vorgefertigt werden, aus welchen dann ein Raumgitterverband, wie später noch eingehend geschildert, errichtet werden kann.

Fig. 1a zeigt einen Schnitt nach der Linie I-I in Fig. 1. Die hier ersichtlichen, seitlichen Ränder 3' der Vertiefungen 3 sind abgerundet ausgeführt, so daß gerade dann, wenn keine exakt rechtwinklige Ausrichtung zwischen den Tragelementen und den Stützelementen erfolgt, keine ungünstigen Belastungen entstehen können.

Fig. 3 zeigt ein Ausführungsbeispiel eines Stützelementes 10, welches im wesentlichen aus zwei der Fig. 2 entsprechenden Stützelementen und einem Mittelsteg besteht. Im Querschnitt sind dann diese Stützelemente 10 H-förmig.

Bei derartigen Stützelementen ergibt sich eine Ausführungsvariante eines Stützelementes 10' gemäß den Fig. 3a und 3b, wobei die Fig. 3b einen Schnitt nach der Linie III-III in Fig. 3a darstellt. Bei dieser Ausgestaltung ist zumindest ein Ende des Stützelementes 10' mit einem vollflächigen Abschluß 10'' versehen. Selbstverständlich kann dieser Abschluß 10'' auch an beiden Ednen des Stützelementes 10' vorgesehen werden. Solcherart ausgestaltete Stützelemente werden zweckmäßigerweise dort verwendet, wo die Frontfläche derselben besonders sichtbar ist. In ästhetischer Hinsicht ist dann eine vollflächige Ausgestaltung wirkungsvoller.

Bei Versuchen hat sich ein Raster als sehr zweckmäßig herausgestellt, gemäß welchem der Mittenabstand aufeinander folgender Vertiefungen der doppelten Gesamtlänge L einer Vertiefung 3 entspricht. Der Abstand des Beginns der ersten Vertiefung 3 vom Rand eines Stützelementes entspricht ebenfalls annähernd der Länge L einer Vertiefung. Wenn dieser Abstand A jedoch nur bis zum Beginn der zuerst schräg abfallenden Vertiefung 3 gemessen wird, so ist er geringfügig kleiner als die Länge L einer Vertiefung 3. Durch diesen besonderen Raster ergeben sich bei den Stützelementen Vertiefungen 3 und Vorsprünge 6. Die Vorsprünge 6 haben dadurch den gleichen Querschnitt und auch die gleiche Querschnittsgröße wie die Vertiefungen 3.

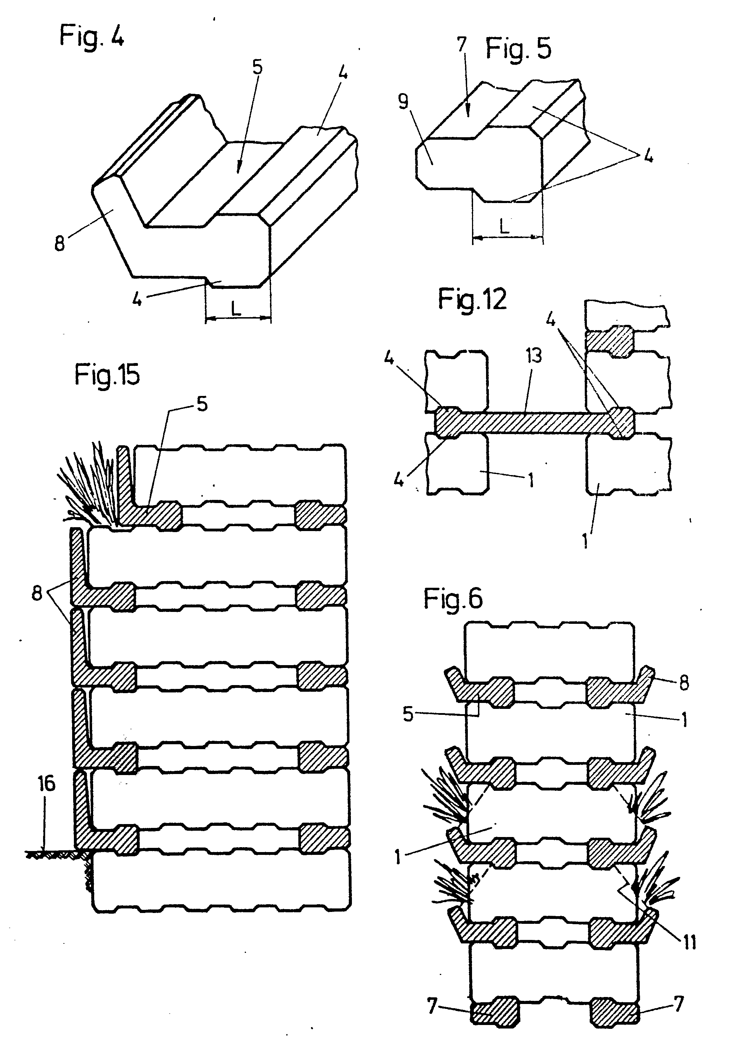

Anhand der Fig. 4 und 5 kann noch entnommen werden, daß zwei verschiedene Ausführungsformen von Tragelementen vorgesehen sind.

Einerseits sind dies die Tragelemente 5 gemäß Fig. 4 und andererseits die Tragelemente 7 gemäß Fig. 5. Die Ausgestaltung der Verstärkungen an dem einen Randbereich ist genau gleich gehalten. Bei dem einen Tragelement 5 ist jedoch am freien Randbereich ein Brüstungselement 8 angeordnet, welches einen stumpfen Winkel mit dem restlichen Abschnitt des Tragelementes 5 einschließt. Diese Form der Tragelemente 5 wird verwendet, wenn die errichtenden Raumgitterkonstruktionen bepflanzt werden sollen. Durch diese Brüstungselemente kann der Aufschüttkegel für Erde wesentlich verbessert werden, so daß eine Bepflanzung direkt hinter den Brüstungselementen und nicht erst wie bei geraden Tragelementen üblich, hinter den Tragelementen selbst erfolgen kann. Die Ausgestaltung eines Tragelementes gemäß Fig. 5 wird dort verwendet, wo eine Bepflanzung nicht in Frage kommt, also an den rückwärtigen oder inneren Bereichen einer Mauer. Der an die Verstärkungen 4 anschließende Abschnitt 9 der Tragelemente gemäß Fig. 5 ist zweckmäßig gleich lang wie die Länge L der Verstärkung 4 bzw. der entsprechenden Vertiefung 3.

Bei der Erstellung der Raumgitterkonstruktion werden die Enden aufeinanderfolgender Tragelemente auf einem Stützelement 1 abgestützt. In der Regel genügt dabei die Breite eines Stützelementes 1 gemäß den Fig. 1 und 2, um die Enden zweier aufeinanderfolgender Tragelemente abzustützen. Wenn jedoch eine Kippgefahr besteht, insbesondere bei Mauern, welche entlang einer schrägen Trasse verlegt werden, dann ist es zweckmäßig, wenn Stützelemente 10 in der Form gemäß Fig. 3 verwendet werden. Diese Stützelemente 10 sind dann im Querschnitt H-förmig ausgebildet, wobei beide parallel zueinander verlaufenden Stege 11 gleiche rasterartig verteilte Vertiefungen 3 aufweisen. Es ist dadurch die Standfestigkeit dieser Stützelemente 10 wesentlich größer als der Stützelemente 1 gemäß Fig. 1 und 2.

Bei dem Zusammenbaubeispiel gemäß Fig. 6 sind mehrere Stützelemente 1 gemäß Fig. 2 in einer Reihe übereinander geschichtet, wobei jeweils Tragelemente 5 mit Brüstungselementen 8 dazwischenliegen. Lediglich für die unterste Abstützung wurden Tragelemente 7 gemäß Fig. 5 verwendet. Es ist aus dieser Figur ersichtlich, daß der Raum innerhalb dieser Mauer in einfachster Weise mit Erde angefüllt werden kann. Die Böschung 11 der Erde kann relativ steil ausgeführt werden und reicht bis zum vordersten Ende der Tragelemente 5, also bis zu den Brüstungselementen 8. Es ist dadurch gleich hinter den Brüstungselementen eine entsprechende Erdhöhe gegeben, so daß unmittelbar in diesem Bereich eine Bepflanzung erfolgen kann, da die Pflanzen hier gleich Wurzeln fassen können.

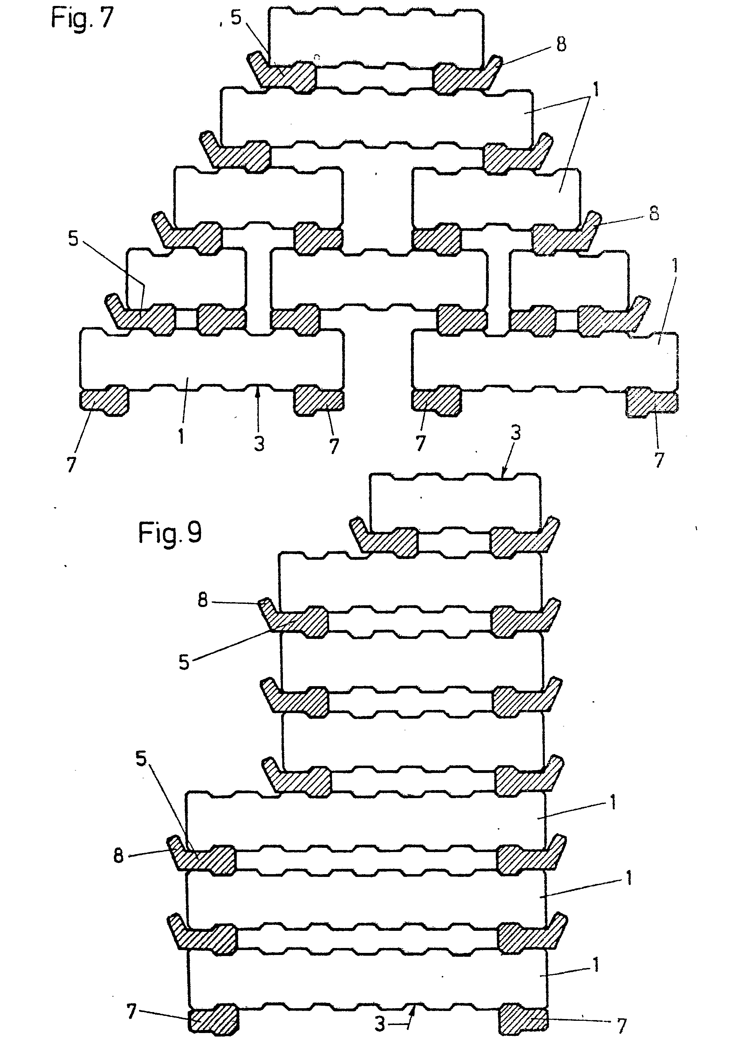

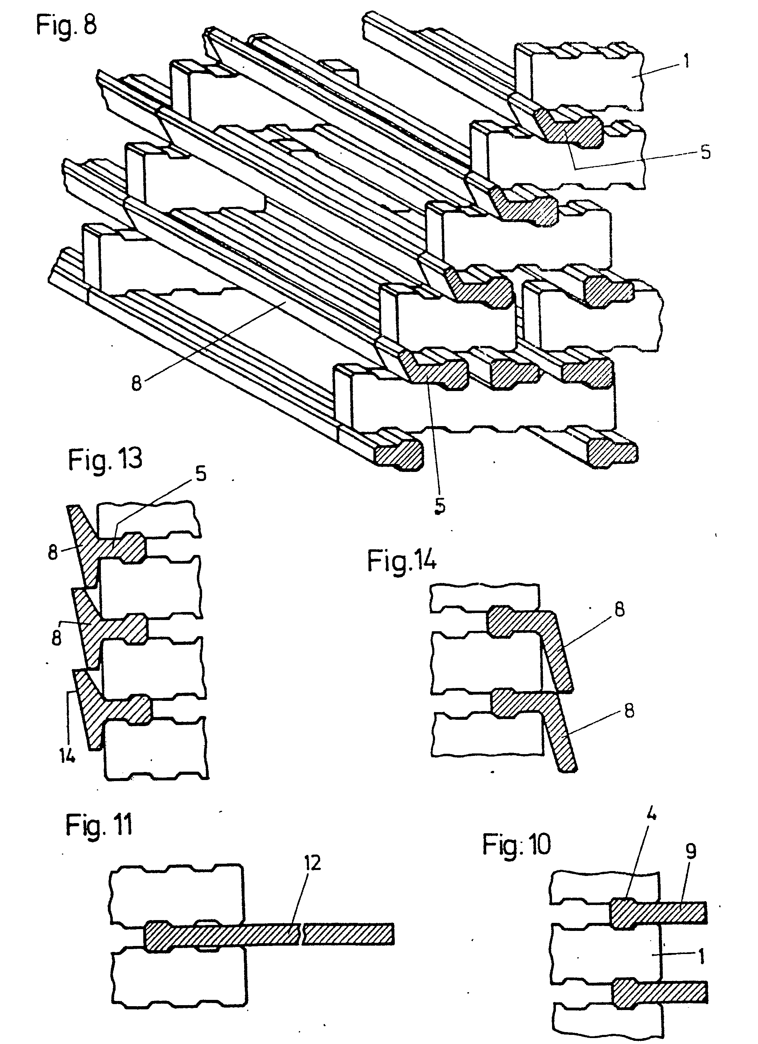

Bei dem Aufbaubeispiel gemäß den Fig. 7 und 8 ist ersichtlich, daß bezüglich der Breite einer Mauer mit den erfindungsgemäßen Elementen keine Grenzen gesetzt sind. Im Gegensatz zu bekannten Ausgestaltungen kann durch die rasterartige Ausbildung der Stützelemente jede beliebige Breite des Mauerfußes und der Mauerkrone erreicht werden. Es werden hier beispielsweise als untere Abstützung Tragelemente 7 verwendet, auf welchen dann Stützelemente 1 mit fünf Vertiefungen 3 aufliegen. Dann folgen wiederum Tragelemente 5 sowie Tragelemente 7, auf welchen Stützelemente mit zwei bzw. vier Vertiefungen 3 aufliegen. Die ganze Raumgitterkonstruktion hat durch die gegenseitige formschlüssige Verbindung aller Teile eine ausgesprochen gute Standfestigkeit, ohne daß es zusätzlicher Mittel zur gegenseitigen Befestigung der Elemente bedarf.

In Fig. 9 ist eine weitere Raumgitterkonstruktion gezeigt, bei welcher eine Mauer auf der einen Seite eine vertikale Begrenzung hat und auf der anderen Seite tsprechend abgestuft wird. Es werden hier zu : drei Stützelemente 1 mit sieben Vertiefungen 3 verwendet, worauf dann drei weitere Stützelemente 1 mit jeweils fünf Vertiefungen folgen. Am obersten Ende dieser Mauer ist dann noch ein Stützelement mit drei Vertiefungen 3 dargestellt. Es bestehen also diverse Möglichkeiten, eine solche Raumgitterkonstruktion den Gegebenheiten anzupassen, wobei insbesondere im Hinblick auf die gute Bepflanzungsmöglichkeit unzählige Variationen denkbar sind.

In Fig. 10 ist ein Ausführungsbeispiel gezeigt, bei welchem der an die Verstärkung 4 anschließende Abschnitt 9 verlängert ausgebildet ist, was beispielsweise aus architektonischen Gründen auf diese Weise gehandhabt werden könnte. Bei einer entsprechenden Versetzung der Stützelemente 1 könnte auf diese Art auch eine Stufenausbildung nach Art einer Stiege erreicht werden, wobei auf diese Weise beispielsweise auch Stehplatztribünen in Stadien errichtet werden könnten.

Bei der Ausgestaltung gemäß Fig. 11 ist ein Tragelement vorgesehen, welches an seinem frei auskragenden Teil als Plattenelement 12 ausgestaltet ist. Auf diese Weise könnten bei Mauern balkonartige Vorsprünge oder auch Abdeckungen für darunterliegende Fußgängerwege und so weiter erreicht werden.

Eine weitere Möglichkeit dieser Art zeigt Fig. 12, in welcher ein Tragelement 13 dargestellt ist, welches an seinen beiden Längsrandbereichen Verstärkungen 4 aufweist, so daß ein solches Tragelement 13 in zwei mit Abstand zueinander angeordneten Raumgitterkonstruktionen eingreifen kann. Durch eine solche Maßnahme könnte beispielsweise eine tunnelartige, nach oben hin abgedeckte Durchgangsöffnung geschaffen werden. Andererseits besteht dadurch die Möglichkeit, zwei im Abstand voneinander angeordnete Raumgitterkonstruktionen gegenseitig zu verbinden und dadurch zu stabilisieren. Weiters ist es denkbar, daß zwischen zwei solchen Raumgitterkonstruktionen beispielsweise auf einer Mauerkrone ein Fußgängerweg oder ein Radweg mit beidseitigen Begrenzungen geschaffen wird, wobei dann dieses Tragelement 13 den Fahrweg bzw. den Fußweg bildet.

Bei den Ausgestaltungen gemäß Fig. 13 bis 15 sind an den Tragelementen 5 verschiedene Ausführungsformen von Brüstungselementen 8 vorgesehen. Diese Brüstungselemente 8 schließen ebenfalls einen stumpfen Winkel mit dem von den Stützelementen 1 zu erfassenden Bereich der Tragelemente 5 ein. Die Breite bzw. Höhe dieser Brüstungselemente 8 ist jedoch gegenüber der Ausführung gemäß der Fig. 4 verschieden. Die Breite bzw. Höhe ist hier gleich oder größer als die Höhe der Stützelemente 1 ausgeführt, so daß dadurch weitere Ausführungsvarianten bei der Erstellung von Raumgitterkonstruktionen möglich sind. Bei der Ausgestaltung nach Fig. 13 ragen die Brüstungselemente von dem Tragelement 5 nach oben und nach unten hin ab, wobei der vordere Abschluß 14 schräg zur Vertikalen verläuft, so daß dadurch eine geschlossene Verkleidung nach Art einer Täfelung erreicht wird.

Bei der Ausgestaltung gemäß Fig. 14 sind die Brüstungselemente 8 schräg nach unten geneigt und übergreifen sich gegenseitig, so daß sie eine dachartige Abdeckung der Mauerbegrenzung bilden. Bei der Ausführungsform gemäß Fig. 15 sind die Tragelemente 5 mit annähernd rechtwinklig nach oben abstehenden Brüstungselementen 8 versehen, welche bis nahe aneinander herangeführt sind, so daß sie sich gegenseitig gerade nicht berühren. Eine solche Ausführungsvariante wäre beispielsweise dort denkbar, wo eine solche Mauer direkt an eine Straße bzw. einen Gehsteig 16 anschließt. Durch die erforderliche Schneeräumung und Reinigung ist es unzweckmäßig, in geringer Höhe bereits eine Bepflanzung vorzusehen. Es wird daher bei dieser Ausführungsform über eine bestimmte Höhe eine geschlossene Wand erreicht, wobei erst weiter oben durch Rückversetzung des nächsten Tragelementes 5 eine Bepflanzungsöffnung geschaffen wird.

Damit eine Raumgitterkonstruktion auch um langgezogene Kurven verlegt werden kann, ohne daß die aneinander anschließenden Tragelemente aufklaffende Nuten zwischen sich freilassen, können die Enden der Tragelemente nach einer Randbegrenzung hin abgeschrägt ausgeführt werden.

Die Brüstungselemente können selbstverständlich auf verschiedene Art und Weise architektonisch gestaltet werden, wobei die hier dargestellten Formen selbstverständlich keine vollständige Aufzählung sind. Auch die Oberfläche dieser Brüstungselemente 8 kann beispielsweise in einer Waschbetonausführung gestaltet oder auch mit einem Anstrich versehen werden.

Durch die erfindungsgemäße Ausgestaltung der Tragelemente und der Stützelemente sind mannigfache Möglichkeiten zur Errichtung von Raumgitterkonstruktionen geschaffen worden, die mit den bislang bekannten Ausgestaltungen nicht möglich waren. Durch die Möglichkeit der Errichtung nach einem Baukastensystem kann auch in einfacher Weise auf Lager gearbeitet werden, wobei dann je nach der Erfordernis die entsprechenden Längen von Stützelementen bei der Ausführung verwendet werden.

Zur Gewichtseinsparung können bei den im Querschnitt H-förmigen Stützelementen (Fig. 3, 3a, 3b) im Quersteg Ausnehmungen vorgesehen werden. Auch ist es denkbar, lediglich an den Enden der Stützelemente Verbindungsstege vorzusehen.

## Patentansprüche

1. Bauelementensatz zur Errichtung von Raumgitterkonstruktionen, z. B. bepflanzbare Stütz-, Böschungs-, Schallschluckmauern od. dgl., bestehend aus in Längsrichtung der Mauer sich erstreckenden Tragelementen (5, 7, 13) und quer dazu verlaufenden, als Abstandhalter für die Tragelemente (5, 7, 13) ausgestalteten Stützelementen (1, 10), wobei die einzelnen Lagen von Tragelementen (5, 7, 13) und Stützelementen (1, 10) einander abwechselnd formschlüssig übergreifen, dadurch gekennzeichnet, daß die Tragelemente (5, 7, 13) zumindest an ihrem einen Längsrandbereich und wenigstens im Kreuzungsbereich mit den Stützelementen (1, 10) an ihrer Oberseite und ihrer Unterseite profilartig in Längsrichtung der Tragelemente (5, 7, 13) verlaufende Verstärkungen (4) und die Stützelemente (1, 10) an ihren oberen und unteren Begrenzungsflächen (2) zwei oder mehrere, dazu korrespondierende, mit Abstand von den Enden der Stützelemente (1, 10) und in rasterartig gleichem Abstand voneinander vorgesehene Vertiefungen (3) aufweisen.

2. Bauelementensatz nach Anspruch 1, dadurch gekennzeichnet, daß die Verstärkungen (4) und die Vertiefungen (3) im Querschnitt annähernd trapezförmig ausgestaltet sind.

3. Bauelementensatz nach Anspruch 1, dadurch gekennzeichnet, daß der Mittenabstand aufeinanderfolgender Vertiefungen (3) der doppelten Gesamtlänge (L) einer Vertiefung (3) entspricht.

4. Bauelementensatz nach den Ansprüchen 1 bis 3, dadurch gekennzeichnet, daß die erste Vertiefung (3) an den Stützelementen (1, 10) annähernd mit der Länge einer Vertiefung (3) entsprechendem Abstand (A) vom Ende des Stützelementes (1, 10) beginnt.

5. Bauelementensatz nach Anspruch 1 und einem der vorhergehenden Ansprüche, dadurch gekennzeichnet, daß die Stützelemente (10, 10') im Querschnitt H-förmig ausgebildet sind, wobei beide parallel zueinander verlaufenden Stege (11) gleiche rasterartig verteilte Vertiefungen (3) aufweisen.

6. Bauelementensatz nach Anspruch 5, dadurch gekennzeichnet, daß die im Querschnitt H-förmigen Stützelemente (10') an ihren Endbereichen vollflächig geschlossen sind.

7. Bauelementensatz nach Anspruch 1 und einem der vorhergehenden Ansprüche, dadurch gekennzeichnet, daß der an die Verstärkung (4) anschließende ebene Abschnitt (9) der Tragelemente (5, 7) gleich lang oder länger als die Länge (L) der Verstärkung (4) bzw. der Vertiefung (3) ausgebildet ist.

8. Bauelementensatz nach Anspruch 1 und den vorhergehenden Ansprüchen, dadurch gekennzeichnet, daß am äußeren freien Längsrandbereich eines Teiles der Tragelemente (5) in an sich bekannter Weise Brüstungselemente (8) anschließen, welche mit dem von den Stützelementen (1) zu erfassenden Bereich einen stumpfen Winkel einschließen.

9. Bauelementensatz nach Anspruch 8, dadurch gekennzeichnet, daß die Breite bzw. Höhe der Brüstungselemente (8) gleich oder größer als die Höhe der Stützelemente (1, 10) ausgeführt ist.

## Claims

1. A set of building parts for the construction of threedimensional structures, e. g. plant-containing support walls, embankment walls or sound-absorbing walls or the like, comprising carrying elements (5, 7, 13) which extend in the longitudinal direction of the wall, and support elements (1, 10) which are formed as spacers for the said carrying elements (5, 7, 13) and which extend transversely thereto, the individual positions of the carrying elements (5, 7, 13) and support elements (1, 10) alternately overlapping one another and interlocking in a positive manner, characterised in that the upper side and the underside of the carrying elements (5, 7, 13) are provided, at least at one of their longitudinal edge areas and at least in the region of crossing with the support elements (1, 10), with thickened portions (4) extending in the longitudinal direction of the carrying elements (5, 7, 13) in the manner of profiles and the upper and lower contact surfaces (2) of the support elements (1, 10) are provided with two or more recesses (3) corresponding to the said thickened portions (4) and spaced from the ends of the support elements (1, 10) and at the same distance from one another in the manner of a grid.

2. A set of building parts according to claim 1, characterised in that the thickened portions (4) and the recesses (3) are approximately trapezoid in cross-section.

3. A set of building parts according to claim 1, characterised in that the centre-to-centre distance of successive recesses (3) corresponds to twice the total length (L) of one recess (3).

4. A set of building parts according to claims 1 to 3, characterised in that the first recesses (3) on the support elements (1, 10) begins at distance (A) from the end of the support element (1, 10) approximately equal to the length of one recess (3).

5. A set of building parts according to claim 1 and any one of the preceding claims, characterised in that the support elements (10, 10') are H-shaped in cross-section, and the two webs (11) extending parallel to one another have similar recesses (3) distributed in the manner of a grid.

6. A set of building parts according to claim 5, characterised in that the H-section support elements (10') have their end regions closed over their entire areas.

7. A set of building parts according to claim 1 and any one of the preceding claims, characterised in that the flat portion (9) of the carrying elements (5, 7) adjoining the thickened portion (4) is made the same length as or longer than the length (L) of the thickened portion (4) or the recess (3).

8. A set of building parts according to claim 1 and the preceding claims, characterised in that breast elements (8) adjoin the outer free longitudinal edge area of part of the carrying elements (5) in a manner known per se and form an obtuse angle with the portion to be engaged by the support elements (1).

9. A set of building parts according to claim 8, characterised in that the width or height of the breast elements (8) is made equal to or greater than the height of the support elements (1, 10).

## Revendications

1. Jeu d'éléments de construction pour l'érection d'ensembles tridimensionnels tels que grilles intérieures d'appartements, par exemple jardinières, murettes de séparation, parois d'isolation sonore, consistant en éléments porteurs (5, 7, 13) s'étendant en direction longitudinale du mur, et des éléments d'appui (1, 10), s'éntendant transversalement aux premiers constitués comme maintiens d'espacement pour les éléments porteurs (5, 7, 13), les position individuelles des éléments porteurs (5, 7, 13) et des éléments d'appui (1, 10) étant déterminées par engagement de forme entre ces éléments, installation caractérisée en ce que les éléments porteurs (5, 7, 13) présentent, au moins sur l'un de leurs bords longitudinaux, et au moins aux points de croisement avec les éléments d'appui (1, 10), sur leur face supérieure et sur leur face inférieure, des prtions saillantes sous forme de surépaisseurs (4) et les éléments d'appui (1, 10) sont pourvus, sur leurs surfaces limites supérieure et inférieure (2), de deux ou plusieurs logements (3), correspondant à ces renforcements (4), espacés à même distance en manière d'engagement.

2. Jeu d'éléments suivant la revendication 1, caractérisée en ce que les portions saillantes (4) et les logements pour leur réception (3) présentent une section transversale en forme de trapèze.

3. Jeu d'éléments suivant la revendication 1, caractérisée en ce que la distance moyenne d'espacement entre les logements de réception (3) correspond au double de la longueur totale (L) d'un logement.

4. Jeu d'éléments suivant l'une quelconque des revendications 1 à 3, caractérisé en ce que le premier logement (3) débute, sur les éléments d'appui (1, 10), à une distance (A) de l'extrémité de l'élément d'appui, sensiblement égale à la longueur d'un logement (3).

5. Jeu d'éléments suivant l'une quelconque des revendications 1 à 4, caractérisé en ce que les éléments d'appui (10, 10') présentent une section transversale en forme de H, dans laquelle deux ailes verticales parallèles présentent des logements de réception (3) régulièrement répartis.

6. Jeu d'éléments suivant la revendication 5, caractérisé en ce que les éléments d'appui (10') à section transversale en forme de U sont fermés à leurs extrémités par une surface plane complète.

7. Jeu d'éléments suivant l'une quelconque des revendications 1 à 6, caractérisé en ce que la portion plane des éléments porteurs (5, 7) qui fait suite à la surépaisseur (4) est de longueur égale ou supérieure à la longueur (L) de la surépaisseur (4) ainsi que du logement de réception (3).

8. Jeu d'éléments suivant l'une quelconque des revendications 1 à 7, caractérisé en ce que, à la zone extérieure du bord longitudinal libre d'une partie de chacun des éléments porteurs (5), se raccordent, de manière connue, des éléments (8) formant balustrade de paroi frontale, qui forment un angle obtus avec la portion en question des éléments appui.

9. Jeu d'éléments suivant la revendication 8, caractérisé en ce que la largeur ou hauteur des éléments de balustrade (8) est égale ou supérieure à la hauteur des l'élément d'appui correspondant (1, 10).

Fig. 1

Fig. 3b

Fig. 2

Fig. 1a

Fig. 3a

Fig. 3

Fig. 4

Fig. 5

Fig.12

Fig.15

Fig.6

Fig. 7

0 016 353

Fig. 9

13

Fig. 8

1

5

8

5

5

Fig. 13

5

8

8

14

Fig.14

8

8

Fig. 11

12

Fig: 10

4

9

1